# EUROPÄISCHE PATENTSCHRIFT

(11) **EP 2 551 874 B1**
(45) Veröffentlichungstag und Bekanntmachung des Hinweises auf die Patenterteilung: **25.05.2016**
(21) Anmeldenummer: 12177917.7
(22) Anmeldetag: 25.07.2012
(51) Int. Cl.: H01H 9/56, H01H 47/00

(54) **Elektrische Relaisansteuerschaltung**
Electric relay control circuit
Commutateur de commande électrique à relais

(30) Priorität: 28.07.2011 DE 102011052251
(43) Veröffentlichungstag der Anmeldung: 30.01.2013
(73) Patentinhaber: PHOENIX CONTACT GmbH & Co. KG, 32825 Blomberg (DE)
(72) Erfinder: Teutenberg, Jürgen, 59602 Rüthen (DE); Koch, Peter, 32657 Lemgo (DE)
(74) Vertreter: Michalski Hüttermann & Partner Patentanwälte mbB

(56) Entgegenhaltungen:
- EP-A1- 0 767 478
- DE-A1- 1 804 332
- DE-A1- 2 449 725
- DE-A1- 19 615 588
- DE-A1-102005 014 125

## Beschreibung

Die Erfindung betrifft eine elektrische Relaisansteuerschaltung zum Ansteuern eines Relais mit einem ersten Schaltelement, wobei die Relaisansteuerschaltung ausgeführt ist, ein Ansteuern des Relais durch eine Betätigung des ersten Schaltelements innerhalb eines Zeitfensters zu durchzuführen, und das Relais eine minimale Schaltdauer für einen Übergang zwischen zwei Schaltzuständen aufweist.

Im Stand der Technik sind verschiedene Schaltungen zur analogen Ansteuerung von Relais bekannt. Dabei ist es teilweise gewünscht, eine Aktivierung des Relais nur in einem begrenzten Zeitfenster zu ermöglichen. Das Zeitfenster kann dabei auf eine beliebige Weise, zum Beispiel periodisch, elektronisch gesteuert oder rein manuell, gestartet werden. Ein elektronisches Starten kann abhängig von beliebigen Kriterien, wie beispielsweise bestimmten Betriebszuständen eines Geräts oder einer Anlage erfolgen. Vielfältige Anwendungen, insbesondere aus der Sicherheitstechnik, sind im Stand der Technik bekannt und werden hier nicht im Einzelnen ausgeführt.

Eine Anwendung betrifft eine Zweihandbedienschaltung. Bei der Betätigung von Maschinen, beispielsweise Stanzen oder Pressen, ist sicherzustellen, dass ein Arbeiter seine Hände aus einem Gefahrenbereich der Maschine entfernt hat. Entsprechend wird durch eine Betätigung eines Schaltelements mit der einen Hand, entsprechend der hier verwendeten Nomenklatur das zweite Schaltelement und die zweite Hand, das Zeitfenster gestartet und durch eine Betätigung des ersten Schaltelements mit der ersten Hand das Relais angesteuert, wenn die Betätigung des ersten Schaltelements innerhalb eines vorgegebenen Zeitfensters erfolgt. Wird das Zeitfenster überschritten, dann ist ein Ansteuern des Relais automatisch gesperrt. Somit wird sichergestellt, dass der Arbeiter beide Hände in einem begrenzten Zeitfenster zur Betätigung der beiden Schaltelemente verwendet. Die Schaltelemente können prinzipiell unmittelbar manuell betätigt werden, weiter verbreitet ist jedoch eine elektronische Betätigung über zwei separate Schalter. Eine separate Zweihandschaltung, die beispielsweise als analoge Schaltung implementiert ist, evaluiert die Zustände der Schalter und bewirkt ein Schalten der Schaltelemente.

Problematisch bei der Ansteuerung des Relais ist, dass die Betätigung des ersten Schaltelements kurz vor Ende des Zeitfensters erfolgen kann, so dass die minimale Schaltzeit unterschritten wird. Die minimale Schaltzeit beruht beispielsweise auf einer Ansprechzeit für die Relaismechanik oder ähnlichem. Wenn die Zeit zwischen der Betätigung des Schaltelements und dem Ende des Zeitfensters jedoch geringer als die minimale Schaltzeit des Relais ist, kann es vorkommen, dass sich manche Relais nicht eindeutig verhalten. Es kann zum kurzzeitigen Schließen des Relais kommen, ohne dass sichergestellt ist, dass der Schaltvorgang abgeschlossen ist. Mitunter ist es nicht möglich zu ermitteln, ob ein Schalten des Relais erfolgt ist. Weiterhin kann ein kurzer Impuls auf den Relaiskontakten entstehen, was in externen Anlagen zu Störungen führen kann.

Aus der DE 24 49 725 A1 ist eine Zweihandschaltung bekannt, die beim Loslassen nur eines ihrer Schaltorgane eine Schließbewegung einer Vorrichtung sofort unterbricht. Ein Steuerungsbefehl wird nur dann einer Werkzeugmachine erteilt, wenn beide Schaltorgane innerhalb eines Zeitabstands von 0,5 s betätigt werden.

Weiterhin ist aus der DE 18 04 332 A1 eine Zweihandbetätigung bekannt, zu deren Einschalten eine Bedienperson zwei getrennte Befehlsorgane gleichzeitig mit je einer Hand betätigen muss. Bei der Betätigung jedes der zwei Befehlsorgane wird jeweils ein Impuls erzeugt und einem Zeitglied zugeführt. Treffen die Impulse beider Befehlsorgane innerhalb eines vorgegebenen Zeitintervalls bei dem Zeitglied ein, so veranlassen sie den Anlauf des Zeitgliedes, das die zu steuernde Vorrichtung auch nach Abklingen der Impulse in Tätigkeit hält. Die Impulse müssen sich dabei teilweise überdecken. Bei Dauerbetätigung eines Befehlsorgans klingt der Impuls ab, so dass eine Betätigung des anderen Befehlsorgans nicht zu einem Starten der Vorrichtung führen kann.

Ausgehend dem zuvor genannten Stand der Technik ist es Aufgabe der vorliegenden Erfindung, eine elektrische Relaisansteuerschaltung anzugeben, bei der sichergestellt wird, dass nach einer Betätigung des ersten Schaltelements das Schalten des Relais zuverlässig durchgeführt werden kann, undefinierte Schaltzustände des Relais vermieden und Rückwirkungen in externe Analagenteile verringert werden.

Die Lösung der Aufgabe erfolgt erfindungsgemäß durch die Merkmale des unabhängigen Anspruchs. Vorteilhafte Ausgestaltungen der Erfindung sind in den Unteransprüchen angegeben.

Erfindungsgemäß wird die Aufgabe durch eine elektrische Relaisansteuerschaltung zum Ansteuern eines Relais, das eine minimale Schaltdauer für den Übergang zwischen zwei Schaltzuständen aufweist, mit einem ersten Schaltelement, wobei die Relaisansteuerschaltung ausgeführt ist, durch eine Betätigung des ersten Schaltelements innerhalb eines Zeitfensters ein Ansteuern des Relais durchzuführen, wobei die Relaisansteuerschaltung eine Mitkoppelschaltung umfasst, die ausgeführt ist, bei Betätigung des ersten Schaltelements innerhalb des Zeitfensters das Ansteuern des Relais für wenigstens die minimale Schaltdauer aufrecht zu erhalten, und die Relaisansteuerschaltung ein erstes Zeitglied und einen ersten Transistor umfasst, wobei der erste Transistor angeordnet ist, um die Stromversorgung des Relais im gesperrten Zustand zu unterbrechen, das erste Zeitglied angeordnet und ausgeführt ist, den ersten Transistor während seiner Entladung für die Dauer des Zeitfensters durchzuschalten, und die Mitkoppelschaltung ausgeführt ist, das Durchschalten des ersten Transistors bei Betätigung des ersten Schaltelements aufrecht zu erhalten.

Die Grundidee der vorliegenden Erfindung ist somit, durch die Mitkopplung eine Ansteuerung des Relais solange aufrechtzuerhalten, bis der durch die Betätigung des ersten Schaltelements begonnene Schaltvorgang durchgeführt ist. Beim Beginn des Schaltvorgangs fließt durch das Relais ein Strom, der für die Mitkopplung verwendet werden kann. Die Mitkopplung bewirkt, dass der Strom aufrecht erhalten wird und das Relais weiter angesteuert wird. Die Mitkopplung kann auf den Teil der Relaisansteuerschaltung, welcher das Zeitfenster realisiert und eine Ansteuerung des Relais durch das erste Schaltelement ermöglicht, wirken. Das Ansteuern des Relais kann unmittelbar durch die Relaisansteuerschaltung geschehen, oder die Relaisansteuerschaltung erzeugt ein Steuersignal, welches ein Schalten des Relais über eine weitere Schaltung bewirkt. Beide Möglichkeiten sind hier erfindungsgemäß umfasst.

Das erste Zeitglied definiert die Dauer des Zeitfensters und kann von außen, beispielsweise wie zuvor beschrieben durch die Betätigung des zweiten Schaltelements, gestartet werden. Mit dem Start des Zeitfensters wird der erste Transistor durchgeschaltet, so dass die Stromversorgung des Relais erfolgt. Die Mitkopplung wirkt auf dem Steuereingang des Transistors derart, dass der erste Transistor bei einem Stromfluss durch das Relais, das heißt wenn eine Betätigung durch das erste Schaltelement erfolgt, leitend geschaltet wird. Gleichzeitig bewirkt das erste Zeitglied, dass der erste Transistor ohne Mitkopplung nur für das Zeitfenster durchgeschaltet wird, so dass bei einer Betätigung des ersten Schaltelements außerhalb des Zeitfensters keine Ansteuerung des Relais gestartet werde kann und auch keine Mitkopplung auftritt.

In vorteilhafter Ausgestaltung der Erfindung weist die Relaisansteuerschaltung ein zweites Schaltelement auf, und die Relaisansteuerschaltung ist ausgeführt, das Zeitfenster bei Betätigung des zweiten Schaltelements zu starten. Entsprechend wird der Beginn des Zeitfensters durch die Betätigung des zweiten Schaltelements definiert. Eine derartige Ausgestaltung ist beispielsweise für eine Zweihandbedienung geeignet.

Eine entsprechende Zweihandbedienschaltung weist die hier beschriebene Relaisansteuerschaltung auf. Zusätzlich sind zwei elektrische Schalter vorgesehen, über die mittelbar oder unmittelbar eine Betätigung der Schaltelemente erfolgt, insbesondere über eine analoge Zweihandschaltung einer der Schalter ist zur Betätigung mit einer ersten Hand und der andere Schalter zur Betätigung mit einer zweiten Hand ausgeführt ist. Die Schalter sind so ausgeführt, dass sie eine manuelle Betätigung erfordern, insbesondere eine Betätigung, die durch eine Hand auszuführen ist. Bei dieser Zweihandbedienschaltung wird sichergestellt, dass Schaltvorgänge des Relais abgeschlossen werden, und es keine undefinierten oder unbekannten Schaltzustände des Relais gibt.

Prinzipiell ist es auch möglich, die Relaisansteuerschaltung in einer anderen Weise zu betreiben. Die Zweihandbedienschaltung ist nur ein Beispiel für die Verwendung der Relaisansteuerschaltung. Aus verschiedenen Gründen, insbesondere aus Sicherheitsaspekten, kann es jedoch erforderlich sein, die Betätigung eines Relais über zwei Schaltelemente durchzuführen. Dabei kann das Zeitfenster über das zweite Schaltelement durch eine manuelle Betätigung gestartet werden, oder durch eine elektrische oder elektronische Schaltung. Auch ist eine periodische Betätigung des zweiten Schaltelements möglich

In weiterer Ausgestaltung der Erfindung ist/sind das erste Schaltelement und/oder das zweite Schaltelement als Taster ausgeführt. Die Ausgestaltung der Schaltelemente als Taster ermöglicht eine einfache Betätigung, so dass auch eine Ansteuerung des Relais in einem kurzen Zeitfenster zuverlässig erfolgen kann. In vorteilhafter Weiterbildung sind die Taster so ausgeführt, dass sie automatisch in ihren Ursprungszustand zurückkehren, wodurch eine erneute Betätigung schnell erfolgen kann.

In vorteilhafter Ausgestaltung der Erfindung umfasst die Mitkoppelschaltung einen Koppeltransistor und ist ausgeführt, bei Betätigung des ersten Schaltelements in dem Zeitfenster über das Relais eine Mitkopplung auf den Schalteingang des ersten Transistors zu erzeugen. Die Mitkopplung bewirkt in diesem Fall einen Stromfluss zu dem ersten Schaltelement, wodurch dieses geschaltet werden kann. Vorzugsweise ist die Ansteuerung des Koppeltransistors derart ausgeführt, dass beispielsweise eine Reihenschaltung aus zwei Widerständen parallel zu dem Relais geschaltet ist, wobei der Steuereingang des Koppeltransistors zwischen den beiden Widerständen angeschlossen ist. Der Koppeltransistor ist vorteilhaft als Bipolar-Transistor ausgeführt.

In weiterer Ausgestaltung der Erfindung umfasst die Relaisansteuerschaltung ein zweites Zeitglied und einen zweiten Transistor, wobei der zweite Transistor derart angeordnet ist, um die Stromversorgung des Relais im gesperrten Zustand zu unterbrechen, das zweite Zeitglied angeordnet und ausgeführt ist, den zweiten Transistor während seiner Entladung für die Dauer des Zeitfensters zusammen mit der minimalen Schaltdauer durchzuschalten,
- Fig. 1: einen Schaltplan einer elektrischen Ansteuerschaltung für ein Relais mit dazugehörigem Relais gemäß einer ersten Ausführungsform der vorliegenden Erfindung,
- Fig. 2: ein Zeitdiagramm mit den Zeitdauern des ersten und zweiten Zeitglieds gemäß der ersten Ausführungsform, und
- Fig. 3: einen Schaltplan einer elektrischen Relaisansteuerschaltung gemäß einer zweiten Ausführungsform der vorliegenden Erfindung.

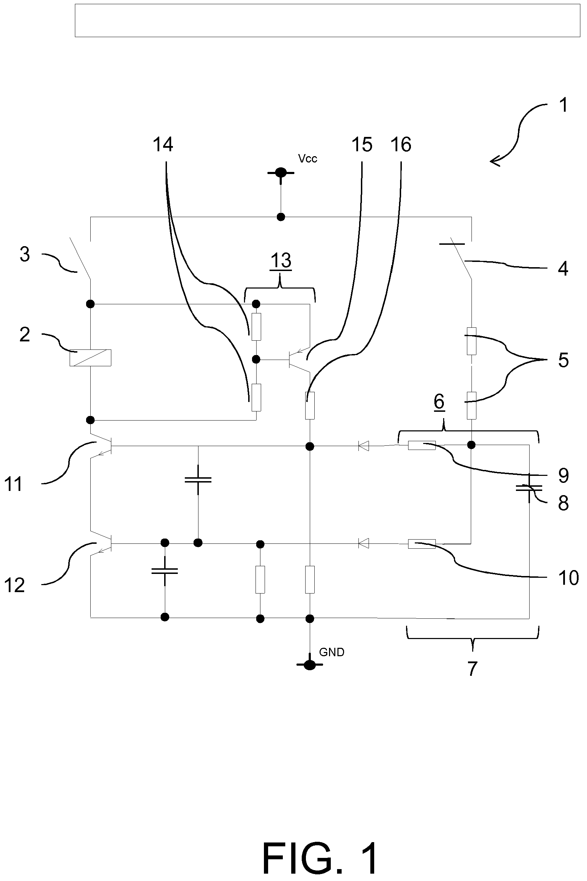

Die Figur 1 zeigt eine elektrische Relaisansteuerschaltung 1 zur Ansteuerung eines Relais 2 gemäß einer ersten Ausführungsform der vorliegenden Erfindung. Die elektrische Relaisansteuerschaltung 1 ist in diesem Ausführungsbeispiel beispielhaft als Teil einer Zweihandbedienschaltung beschrieben, wie im Weiteren ausgeführt werden wird.

Die elektrische Relaisansteuerschaltung 1 umfasst ein erstes und ein zweites Schaltelement 3, 4, wie in Fig. 1 gezeigt ist. Die Schaltelemente 3, 4 sind beliebige im Stand der Technik bekannte Schaltelemente, über welche die elektrische Relaisansteuerschaltung 1 bei Betätigung des jeweiligen Schaltelements 3, 4 an den entsprechenden Kontakten mit einer Betriebsspannung Vcc verbunden wird. Das erste Schaltelement 3 ist als Schließer ausgeführt, während das zweite Schaltelement 4 als Öffner ausgeführt ist. Die beiden Schaltelemente 3, 4 werden über eine hier nicht gezeigte Zweihandschaltung betätigt. Die Zweihandschaltung ist ausgeführt, die Schaltelemente 3, 4 bei einer Betätigung von zwei ebenfalls nicht gezeigten Schaltern zu betätigen. Derartige Zweihandschaltungen sind in der Technik bekannt, so dass hier nicht im Detail darauf eingegangen wird.

Das zweite Schaltelement 4 ist über zwei Ladewiderstände 5 mit einem ersten und einem zweiten Zeitglied 6, 7, die als RC-Zeitglieder ausgeführt sind, verbunden. Die Zeitglieder 6, 7 umfassen einen gemeinsamen Kondensator 8 als Energiespeicher, der ohne Betätigung des zweiten Schaltelements 4 über dieses und die Ladewiderstände 5 geladen wird. Die Zeitglieder 6, 7 umfassen entsprechend einen ersten bzw. einen zweiten Widerstand 9, 10, über welche der Kondensator 8 bei einer Betätigung des zweiten Schaltelements 4 entladen wird.

In einer Stromversorgung zu dem Relais 2 sind ein erster und ein zweiter Transistor 11, 12 derart vorgesehen, dass durch Sperren von jedem der Transistoren 11, 12 die Stromversorgung des Relais 2 unterbrochen wird. Die Transistoren 11, 12 sind beispielhaft als BipolarTransistoren ausgeführt. Der erste Transistor 11 ist mit dem ersten Zeitglied 6 derart verbunden, dass über das erste Zeitglied 6 eine Ansteuerung an dem Steuereingang des ersten Transistors 11 erfolgt. Der zweite Transistor 12 ist mit seinem Steuereingang mit dem zweiten Zeitglied 7 verbunden ist. Die Zeitglieder 6, 7 bewirken, dass der mit ihnen verbundene Transistor 11, 12 während des Entladens des Kondensators 8 leitend geschaltet wird. Bei einer Betätigung des ersten Schaltelements 3 fließt ein Strom durch das Relais 2, so dass eine Ansteuerung des Relais 2 erfolgt, wenn beide Transistoren 11, 12 durchgeschaltet sind.

Die Zeitglieder 6, 7 sind so dimensioniert, dass das erste Zeitglied 6 den ersten Transistor 11 für die Dauer eines vorgegebenen Zeitfensters leitend schaltet, während das zweite Zeitglied 7 den zweiten Transistor 12 für eine Zeitdauer, die der des Zeitfensters plus einer minimalen Schaltdauer des Relais 2 entspricht, durchschaltet.

Die elektrische Ansteuerschaltung 1 umfasst weiterhin eine Mitkoppelschaltung 13, die parallel zu dem Relais 2 geschaltet ist. Die Mitkoppelschaltung 13 umfasst zwei Koppelwiderstände 14, die parallel zu dem Relais 2 einen Spannungsteiler bilden, einen Koppeltransistor 15, der beispielhaft als Bipolar-Transistor ausgeführt ist und dessen Basis zwischen den Koppelwiderständen 14 angeschlossen ist, sowie einen Freischaltwiderstand 16, über den die Mitkoppelschaltung 13 mit dem Steuereingang des ersten Transistors 11 verbunden ist.

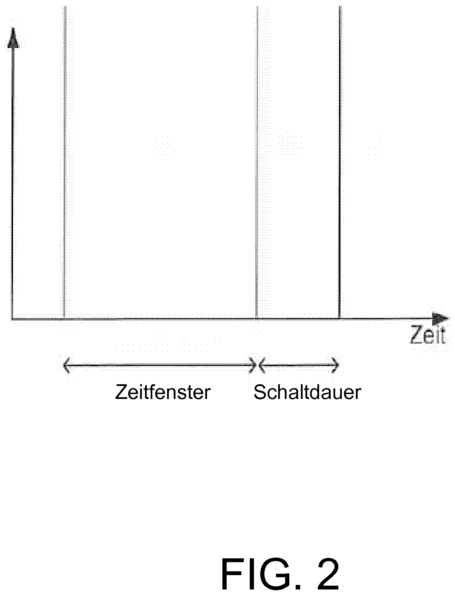

Im Folgenden wird der Betrieb der elektrischen Relaisansteuerschaltung 1 unter zusätzlichem Bezug auf Figur 2 erläutert.

Ohne Betätigung der Schalter befinden sich die beiden Schaltelemente 3, 4 in einer Ruhestellung, in der das erste Schaltelement 3 geöffnet und das zweite Schaltelement 4 geschlossen ist. Entsprechend werden die beiden Zeitglieder 6, 7 über das zweite Schaltelement 4 und die Ladewiderstände 5 kontinuierlich geladen. Außerdem fließt ein Strom durch die Widerstände 9, 10, sodass die Transistoren 11, 12 leitend geschaltet sind. Durch Betätigung der Schalter erfolgt über die analoge Zweihandschaltung eine Betätigung der beiden Schaltelemente 3, 4. Die Betätigung erfolgt quasi gleichzeitig, wobei ein zeitlicher Versatz im Bereich von ungefähr 10 ms eine übliche Toleranz darstellt. Anschließend werden die beiden Zeitglieder 6, 7 über einen Strom durch die Widerstände 9, 10 entladen, wobei die Transistoren 11, 12 zunächst leitend geschaltet bleiben. Entsprechend ist das Relais 2 mit einer Masse in der gezeigten elektrischen Relaisansteuerschaltung 1 verbunden.

Das erste Zeitglied 6 bewirkt, dass der erste Transistor 11 für die Dauer des Zeitfensters, das in Figur 2 dargestellt ist, durchgeschaltet wird. Der zweite Transistor 12 wird durch das zweite Zeitglied 7 für die Dauer des Zeitfensters plus die minimale Schaltdauer durchgeschaltet. Wenn eine Betätigung des ersten Schaltelements 3 beispielsweise aufgrund einer unvorhergesehenen Verzögerung, eines Defekts oder ähnlichem mit einer Verzögerung noch während des Zeitfensters erfolgt, wird das Relais 2 angesteuert. Wenn die Ansteuerung des Relais 2 innerhalb des Zeitfensters beginnt und die verbleibende Zeit größer als die minimale Schaltdauer ist, wird der erste Transistor 11 durch das erste Zeitglied 6 so lange durchgeschaltet, dass ein Übergang zwischen zwei Schaltzuständen des Relais erfolgen kann.

Bei einer Betätigung des ersten Schaltelements 3 gegen Ende des Zeitfensters wird die Ansteuerung des Relais 2 wie zuvor gestartet, wobei der erste Transistor 13 nach Ablauf des Zeitfensters nicht mehr von dem ersten Zeitglied 6 durchgeschaltet wird. Durch die Mitkopplung über die Mitkoppelschaltung 13 wird das Durchschalten des ersten Transistors 11 aufrecht erhalten und die Ansteuerung des Relais 2 kann fortgesetzt werden. Nach Ablauf des Zeitfensters plus der minimalen Schaltdauer bewirkt das zweite Zeitglied 7, dass der zweite Transistor 12 nicht mehr durchgeschaltet wird, sondern sperrt, wodurch die Ansteuerung des Relais 2 unterbrochen wird. Entsprechend bricht eine evtl. bestehende Mitkopplung über die Mitkoppelschaltung 13 zusammen, so dass auch der erste Transistor 11 sperrt.

Wenn eine Betätigung des ersten Schaltelements 3 außerhalb des Zeitfensters erfolgt, befindet sich der erste Transistor 11 im gesperrten Zustand, so dass kein Strom durch das Relais 2 fließt. Entsprechend kann keine Mitkopplung über die Mitkoppelschaltung 13 aufgebaut werden und einer Ansteuerung des Relais 2 erfolgt nicht.

Nach der erfolgten oder, im Falle der Überschreitung des Zeitfensters, auch ausgebliebenen Betätigung des Relais 2 wird durch die Zweihandschaltung die Betätigung der Schaltelemente 3, 4 beendet. Entsprechend wird der Kondensator 8 wieder geladen, so dass die Relaisansteuerschaltung 1 für eine erneute Betätigung vorbereitet wird.

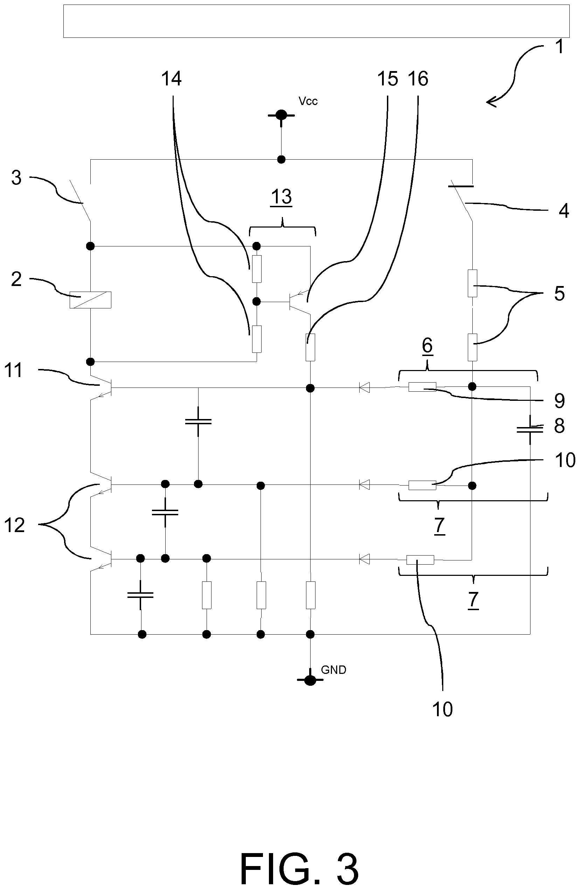

Im Weiteren wird unter Bezug auf Fig. 3 eine modifizierte Ausführungsform der elektrischen Relaisansteuerschaltung 1 beschrieben. Soweit Übereinstimmung mit der elektrischen Ansteuerschaltung 1 des ersten Ausführungsbeispiels besteht, wird auf die entsprechenden Ausführungen zum ersten Ausführungsbeispiel verwiesen. Auf wiederholende Erläuterungen wird verzichtet.

Das Relais ist in diesem Ausführungsbeispiel unmittelbar in der Relaisansteuerschaltung 1 gezeigt, es kann jedoch in einer alternativen Ausführungsform auch separat vorgesehen sein. In diesem Fall wird über die Relaisansteuerschaltung 1 ein Steuersignal erzeugt, welches ein Schalten des Relais über eine weitere Schaltung bewirkt.

Die elektrische Relaisansteuerschaltung 1 des zweiten Ausführungsbeispiels zeigt explizit das erste und zweite Schaltelement 3, 4.

Abweichend von der ersten Ausführungsform umfasst die elektrische Ansteuerschaltung 1 gemäß der zweiten Ausführungsform ein doppelt ausgeführtes zweites Zeitglied 7 mit einem entsprechenden doppelt ausgeführten zweiten Transistor 12. Die zweiten Transistoren 12 sind in Reihe in der Stromversorgung des Relais 2 geschaltet. Die zweiten Widerstände 10 der zweiten Zeitglieder 7 sind gleich ausgeführt, um eine parallele Ansteuerung der beiden zweiten Transistoren 12 zu bewirken. Dadurch wird gegenüber dem ersten Ausführungsbeispiel eine höhere Sicherheit erreicht. Bei einer Fehlfunktion eines der beiden zweiten Transistoren 12, bei welcher der entsprechende zweite Transistor 12 dauerhaft durchschaltet, wird über den anderen zweiten Transistor 12 eine Unterbrechung der Ansteuerung des Relais 2 nach Ablauf des Zeitfensters plus der minimalen Schaltdauer bewirkt.

Darüber hinausgehende Abweichungen zu der elektrischen Relaisansteuerschaltung 1 des ersten Ausführungsbeispiels liegen nicht vor. Der Betrieb ist wie unter Bezug auf das erste Ausführungsbeispiel beschrieben.

In einer alternativen Ausführungsform, die in den Figuren nicht gezeigt ist und mit dem ersten wie auch dem zweiten Ausführungsbeispiel der vorliegenden Erfindung kombinierbar ist, ist das zweite Schaltelement 4 durch eine übergeordnete Schaltung ersetzt. Die Schaltung steuert das Laden des Kondensators 8 der Zeitglieder 6, 7, so dass das Zeitfenster unabhängig von einer Betätigung gestartet wird. Diese übergeordnete Schaltung kann beliebig ausgeführt sein und das Zeitfenster nach beliebigen Kriterien starten.

**Bezugszeichenliste**

| | |
|---|---|
| elektrische Relaisansteuerschaltung | 1 |
| Relais | 2 |
| erstes Schaltelement | 3 |
| zweites Schaltelement | 4 |
| Ladewiderstand | 5 |
| erstes Zeitglied | 6 |
| zweites Zeitglied | 7 |
| Kondensator | 8 |
| erster Widerstand | 9 |
| zweiter Widerstand | 10 |
| erster Transistor | 11 |
| zweiter Transistor | 12 |
| Mitkoppelschaltung | 13 |
| Koppelwiderstand | 14 |
| Koppeltransistor | 15 |
| Freischaltwiderstand | 16 |

## Patentansprüche

1. Elektrische Relaisansteuerschaltung (1) zum Ansteuern eines Relais (2), das eine minimale Schaltdauer für den Übergang zwischen zwei Schaltzuständen aufweist,
mit einem ersten Schaltelement (3),
wobei
die Relaisansteuerschaltung (1) ausgeführt ist, durch eine Betätigung des ersten Schaltelements (3) innerhalb eines Zeitfensters ein Ansteuern des Relais (2) durchzuführen,
**dadurch gekennzeichnet, dass**
die Relaisansteuerschaltung (1) eine Mitkoppelschaltung (13) umfasst, die ausgeführt ist, bei Betätigung des ersten Schaltelements (3) innerhalb des Zeitfensters das Ansteuern des Relais (2) für wenigstens die minimale Schaltdauer aufrecht zu erhalten, und
die Relaisansteuerschaltung (1) ein erstes Zeitglied (6) und einen ersten Transistor (11) umfasst, wobei
der erste Transistor (11) angeordnet ist, um die Stromversorgung des Relais (2) im gesperrten Zustand zu unterbrechen,
das erste Zeitglied (6) angeordnet und ausgeführt ist, den ersten Transistor (11) während seiner Entladung für die Dauer des Zeitfensters durchzuschalten, und
die Mitkoppelschaltung (13) ausgeführt ist, das Durchschalten des ersten Transistors (11) bei Betätigung des ersten Schaltelements (3) aufrecht zu erhalten.

2. Elektrische Relaisansteuerschaltung (1) nach Anspruch 1, **dadurch gekennzeichnet, dass**
die Relaisansteuerschaltung (1) ein zweites Schaltelement (4) aufweist, und
die Relaisansteuerschaltung (1) ausgeführt ist, das Zeitfenster bei Betätigung des zweiten Schaltelements (4) zu starten.

3. Elektrische Relaisansteuerschaltung (1) nach einem der Ansprüche 1 oder 2, **dadurch gekennzeichnet, dass**
das erste Schaltelement (3) und/oder das zweite Schaltelement (4) als Taster ausgeführt ist/sind.

4. Elektrische Relaisansteuerschaltung (1) nach einem der vorhergehenden Ansprüche 1 bis 3, **dadurch gekennzeichnet, dass**
die Mitkoppelschaltung (13) einen Koppeltransistor (15) umfasst und ausgeführt ist, bei Betätigung des ersten Schaltelements (3) in dem Zeitfenster über das Relais (2) eine Mitkopplung auf den Schalteingang des ersten Transistors (11) zu erzeugen.

5. Elektrische Relaisansteuerschaltung (1) nach einem der vorhergehenden Ansprüche, **dadurch gekennzeichnet, dass**
die Relaisansteuerschaltung (1) ein zweites Zeitglied (7) und einen zweiten Transistor (12) umfasst, wobei der zweite Transistor (12) derart angeordnet ist, um die Stromversorgung des Relais (2) im gesperrten Zustand zu unterbrechen,
das zweite Zeitglied (7) angeordnet und ausgeführt ist, den zweiten Transistor (12) während seiner Entladung für die Dauer des Zeitfensters zusammen mit der minimalen Schaltdauer durchzuschalten, wobei
das zweite Zeitglied (7) gemeinsam mit dem ersten Zeitglied (6) gestartet wird.

6. Elektrische Relaisansteuerschaltung (1) nach einem der vorhergehenden Ansprüche, **dadurch gekennzeichnet, dass**
das erste und/oder das zweite Zeitglied (6, 7) als RC-Zeitglied ausgeführt ist/sind.

7. Elektrische Relaisansteuerschaltung (1) nach Anspruch 6 in Kombination mit Anspruch 5, **dadurch gekennzeichnet, dass**
das erste und das zweite Zeitglied (6, 7) als RC-Zeitglieder ausgeführt sind und einen gemeinsamen Kondensator (8) aufweisen.

## Claims

1. An electrical relay control circuit (1) for controlling a relay (2), which has a minimum switching time for the transition between two switching states,
said control circuit having a first switching element (3), wherein
the relay control circuit (1) is configured to implement control of the relay (2) by means of an actuation of the first switching element (3) within a time window, **characterised in that**
the relay control circuit (1) comprises a coupling circuit (13), which is configured, in the event of actuation of the first switching element (3) within the time window, to maintain the control of the relay (2) for at least the minimum switching time, and
the relay control circuit (1) comprises a first timer (6) and a first transistor (11), wherein
the first transistor (11) is arranged to interrupt the power supply of the relay (2) in the blocked state,
the first timer (6) is arranged and configured to connect the first transistor (11) during discharge thereof for the duration of the time window, and
the coupling circuit (13) is configured to maintain the connection of the first transistor (11) in the event of actuation of the first switching element (3).

2. The electrical relay control circuit (1) according to Claim 1, **characterised in that**
the relay control circuit (1) has a second switching element (4), and
the relay control circuit (1) is configured to start the time window in the event of actuation of the second switching element (4).

3. The electrical relay control circuit (1) according to either of Claims 1 or 2, **characterised in that** the first switching element (3) and/or the second switching element (4) is/are configured as pushbuttons.

4. The electrical relay control circuit (1) according to any one of preceding Claims 1 to 3, **characterised in that** the coupling circuit (13) comprises a coupling transistor (15) and is configured, in the event of actuation of the first switching element (3) in the time window via the relay (2), to generate a coupling at the switch input of the first transistor (11).

5. The electrical relay control circuit (1) according to any one of the preceding claims, **characterised in that** the relay control circuit (1) comprises a second timer (7) and a second transistor (12), wherein the second transistor (12) is arranged in such a way so as to interrupt the power supply of the relay (2) in the blocked state,
the second timer (7) is arranged and configured to connect the second transistor (12) during discharge thereof for the duration of the time window together with the minimum switching time, wherein
the second timer (7) is started jointly with the first timer (6).

6. The electrical relay control circuit (1) according to any one of the preceding claims, **characterised in that** the first and/or the second timer (6, 7) is/are configured as an RC timer.

7. The electrical relay control circuit (1) according to Claim 6 in combination with Claim 5, **characterised in that** the first and the second timer (6, 7) are configured as RC timers and have a common capacitor (8).

## Revendications

1. Commutateur de commande électrique à relais (1) pour l'activation d'un relais (2) qui présente une durée minimale de commutation pour la transition entre deux états de commutation,
avec un premier élément de commutation (3),
où
le commutateur de commande à relais (1) est prévu pour exécuter une activation du relais (2) pendant une fenêtre temporelle par un actionnement d'un premier élément de commutation (3),
**caractérisé en ce que**
le commutateur de commande à relais (1) comprend un commutateur de couplage par signal direct (13) qui est conçu pour rester en position verticale pendant au moins la durée de commutation minimale lors de l'actionnement du premier élément de commutation (3), et
le commutateur de commande à relais (1) comprend un premier organe de temporisation (6) et un premier transistor (11), où
le premier transistor (11) est disposé de sorte à interrompre l'alimentation électrique du relais (2) dans l'état bloqué,
le premier organe de temporisation (6) est disposé et construit pour maintenir le premier transistor (11) dans son état pendant sa décharge pour la durée de la fenêtre temporelle, et
le commutateur de couplage par signal direct (13) est conçu pour maintenir l'activation du premier transistor (11) en position verticale lors de l'actionnement du premier élément de commutation (3).

2. Commutateur de commande électrique à relais (1) selon la revendication 1, **caractérisé en ce que**
le commutateur de commande à relais (1) présente un deuxième élément de commutation (4), et
le commutateur de commande à relais (1) est conçu de sorte que la fenêtre temporelle est démarrée lors de l'actionnement du deuxième élément de commutation (4).

3. Commutateur de commande électrique à relais (1) selon l'une des revendications 1 ou 2, **caractérisé en ce que**
le premier élément de commutation (3) et/ou le deuxième élément de commutation (4) est (sont) conçu (s) sous la forme de bouton (s).

4. Commutateur de commande électrique à relais (1) selon l'une des revendications précédentes 1 à 3, **caractérisé en ce que**
le commutateur de couplage par signal direct (13) comprend un transistor de couplage (15) et est conçu, lors de l'actionnement du premier élément de commutation (3) dans la fenêtre temporelle, pour générer un couplage par signal direct sur l'entrée de commutation du premier transistor (11) par l'intermédiaire du relais (2).

5. Commutateur de commande électrique à relais (1) selon l'une des revendications précédentes, **caractérisé en ce que**
le commutateur de commande à relais (1) comprend un deuxième organe de temporisation (7) et un deuxième transistor (2), où le deuxième transistor (12) est disposé de sorte à interrompre l'alimentation électrique du relais (2) dans l'état bloqué,
le deuxième organe de temporisation (7) est disposé et conçu pour activer le deuxième transistor (12) pendant sa décharge pour la durée de la fenêtre temporelle ajoutée à la durée de commutation minimale, où
le deuxième organe de temporisation (7) est activé simultanément avec le premier organe de temporisation (6).

6. Commutateur de commande électrique à relais (1) selon l'une des revendications précédentes, **caractérisé en ce que**
le premier et/ou le deuxième organe de temporisation (6, 7) est (sont) conçu (s) sous la forme d'un organe de temporisation RC.

7. Commutateur de commande électrique à relais (1) selon la revendication 6 en combinaison avec la revendication 5, **caractérisé en ce que**
les premier et deuxième organes de temporisation (6, 7) sont conçus sous la forme d'organes de temporisation RC et présentent un condensateur (8) commun.
